# EUROPÄISCHE PATENTSCHRIFT

(11) **EP 2 048 096 B1**
(45) Veröffentlichungstag und Bekanntmachung des Hinweises auf die Patenterteilung: **14.07.2010**
(21) Anmeldenummer: 08166446.8
(22) Anmeldetag: 13.10.2008
(51) Int. Cl.: B65G 41/00, B64F 1/32

(54) **Gepäckförderer**
Luggage transporter
Convoyeur de bagages

(30) Priorität: 11.10.2007 DE 102007048876
(43) Veröffentlichungstag der Anmeldung: 15.04.2009
(73) Patentinhaber: MULAG Fahrzeugwerk Heinz Wössner GmbH & Co. KG, 77728 Oppenau (DE)
(72) Erfinder: Verbücheln, Karl-Josef, 77871, Renchen-Ulm (DE)
(74) Vertreter: Alber, Norbert

(56) Entgegenhaltungen:
- WO-A-01/44049
- WO-A-01/51356
- WO-A-97/39969
- DE-A1-102004 014 406
- US-A- 3 885 682
- US-A1- 2004 033 126

## Beschreibung

### I. Anwendungsgebiet

Die Erfindung betrifft einen Gepäckförderer, insbesondere einen fahrbaren Gepäckförderer, wie er auf dem Vorfeld von Flughäfen zum Be- und Entladen von Flugzeugen eingesetzt wird. Daneben sind auch stationäre Einsätze, beispielsweise an der Verladerampe eines Lagerhauses oder Ähnliches, vorstellbar, wo ähnliche Probleme auftreten können.

### II. Technischer Hintergrund

Dabei wird in der Regel beim Beladen des Flugzeuges das Gepäck der Passagiere mit Gepäckwägen zum Flugzeug gefahren und muss dort in die meist in mehreren Metern Höhe gelegene Ladeluke des Flugzeuges hineintransportiert werden.

Zu diesem Zweck wird ein Gepäckförderer, der auf einem fahrbaren, meist selbstfahrenden, Chassis montiert ist, unter das Flugzeug gefahren und das vordere Ende des Hauptförderers, meist eines Förderbandes, dieses Gepäckförderers hochgefahren auf Höhe der Ladeluke und teilweise in die Ladeluke hinein, während das hintere Ende des Hauptförderers auf einem Niveau nahe dem Niveau des Vorfeldes oder nur etwa einem Meter darüber, verbleibt.

Dabei besteht ein Problem darin, dass auch kleinste Beschädigungen am Flugzeug, also auch an den Seitenkanten der Ladeluke oder Ähnlichem, durch den Hauptförderer unbedingt vermieden werden müssen, weshalb das vordere Ende des Hauptförderers einmal korrekt und möglichst berührungsfrei in der Ladeluke positioniert wird und danach die Stellung des Hauptförderers nicht mehr verändert werden soll, außer, die Position der Ladeluke ändert sich durch zunehmende Be- oder Entladung des Flugzeuges.

Dann wird jedes einzelne Gepäckstück manuell den Gepäckwägen entnommen und auf das hintere Ende des Hauptförderers des Gepäckförderers aufgelegt, was jedoch viel Handarbeit erfordert.

Diese Handarbeit fällt umso geringer aus, je genauer das hintere Ende des Förderers, auf die die Gepäckstücke aufgelegt werden müssen, mit dem Entnahmeniveau aus den Gepäckwägen übereinstimmt, und je näher dieses hintere Ende des Förderers an den Gepäckwägen endet.

Da die Gepäckwägen einen Boden besitzen, der wegen der kleinen Räder nur 20 bis 60 cm über dem Untergrund liegt, im vollbeladenen Zustand das oberste Gepäckstück im Gepäckwagen jedoch durchaus fast zwei Meter über dem Boden positioniert sein kann, ist während des Entladens der Gepäckwägen eine Höhenverstellung des hinteren Endes des zu beschickenden Förderers notwendig.

Zusätzlich wird das Gepäck für ein Flugzeug nicht in einem einzigen Gepäckwagen Platz finden, sondern es müssen deren mehrere entladen werden, die meist hintereinander gekoppelt zu einem Gepäckzug verbunden sind und gemeinsam an den Gepäckförderer herangefahren werden.

Um ein schnelles Beladen des Flugzeuges zu gewährleisten, sollen die mehreren Gepäckwägen eines Gepäckzuges nacheinander entladen werden können, möglichst ohne Rangierarbeit sowohl seitens des Gepäckzuges als auch seitens des Gepäckförderers.

Aus diesem Grund ist es bereits bekannt, die Gepäckstücke nicht unmittelbar auf das hintere Ende des Hauptförderers aufzulegen, sondern an das hintere Ende des Hauptförderers einen Zuförderer mit geringerer Länge anzuschließen, der damit auch weniger stabil und in der Höhe weniger dick ausgeführt sein muss, weshalb dessen hinteres Ende auch niedriger über den Boden abgesenkt werden kann als das in der Regel oberhalb des Chassis montierte hintere Ende des Hauptförderers.

Zusätzlich ist es bekannt (beispielsweise aus der US 200410033126 A1, in dem ein Gepäckförderer gemäß dem Oberbegriff des Anspruchs 1 offenbart wird), einen solchen Zuförderer verschwenkbar hinsichtlich der radialen Abstrebrichtung seines hinteren Endes zu gestalten, weshalb zwischen Zuförderer und Hauptförderer ein Zwischentisch angeordnet ist, um den herum der Zuförderer um eine meist vertikale Achse verschwenkbar ist.

Da der Zwischentisch jedoch in seiner Höhe meist fix montiert war, ergab sich für Zuförderer und Hauptförderer abhängig von Höhe der Lageluke und Höhe der Entnahmeposition des Gepäcks aus den Gepäckwägen ein jeweils anderer Neigungswinkel.

Weiterhin zeigt die WO 01144049 einen Gepäckförderer, bei dem das hintere Ende des Hauptförderers in seiner Höhe separat einstellbar ist, und an diesem hinteren Ende des Hauptförderers das vordere Ende eines Zuförderers befestigt ist, welches dann mitbewegt wird.

Allerdings ist zwischen beiden kein Zwischentisch vorhanden.

### III. Darstellung der Erfindung

### a) Technische Aufgabe

Es ist die Aufgabe gemäß der Erfindung einen Gepäckförderer insbesondere für das Vorfeld von Flughäfen sowie ein Verfahren zu seinem Betrieb aufzuzeigen, welches trotz einfacher und kostengünstiger Konstruktion eine sehr schnelle Be- und Entladung von Flugzeugen ermöglicht und dabei insbesondere eine gegenseitig angepasste Neigung von Hauptförderer und Zuförderer des Gepäckförderers ermöglicht.

### b) Lösung der Aufgabe

Diese Aufgabe wird durch die Merkmale der Ansprüche 1 und 16 gelöst. Vorteilhafte Ausführungsformen ergeben sich aus den Unteransprüchen.

Durch die Höhenverstellbarkeit des hinteren Endes des Gepäckförderers mit dem Zwischentisch kann das hintere Ende des Gepäckförderers auf die gewünschte Höhe z. B. der Gepäckwägen eingestellt werden.

Dieser Zwischentisch kann eine einfache Gleitfläche sein oder selbst eine Fördereinrichtung, wie etwa angetriebene Transportrollen, enthalten. Der Zwischentisch muss sich auf gleicher Höhe wie das hintere Ende des Hauptförderers und das vordere Ende des Zuförderers befinden. Zwar dürfen geringfügige Höhenunterschiede vom Zuförderer zum Zwischentisch und vom Zwischentisch zum Hauptförderer vorhanden sein, aber jeweils in Förderrichtung nur mit einem Höhenversatz nach unten und nicht nach oben, da sonst eine gleichmäßige Weiterförderung der Gepäckstücke nicht gewährleistet ist, weshalb zur Vermeidung eines Nachstellens am Übergang immer die gleiche Höhe eingestellt wird.

Bevorzugt wird dies sichergestellt, indem lediglich der Hauptförderer mittels beweglicher Abstützelemente, z. B. Hydraulikzylindern, am vorderen und hinteren Ende abhebbar und absenkbar ist, und der Zwischentisch, insbesondere einschließlich des Zuförderers, am hinteren Ende des Hauptförderers befestigt ist.

Dabei kann das hintere Ende des Zuförderers in der Höhe verstellt werden, indem der Zuförderer um eine horizontale Schwenkachse in der Nähe seines vorderen Endes oder direkt an seinem vorderen Ende verschwenkt wird. Vorzugsweise jedoch ist das vordere Ende des Zuförderers direkt am hinteren Ende des Zwischentisches befestigt, und nur das vordere Ende des Zwischentisches ist um eine horizontale Schwenkachse, die quer zur Förderrichtung des Hauptförderers liegt, verschwenkbar.

Durch dieses Verschwenken wird also die Neigung sowohl des Zwischentisches als auch des vorzugsweise um eine gemeinsame Schwenkachse mit ihm schwenkenden Zuförderers, die am vorderen Ende des Zwischentisches liegt, verstellt.

Durch das Befestigen des Ladetisches und/oder des Zuförderers am hinteren Ende des Hauptförderers werden durch Verstellung des hinteren Endes des Hauptförderers automatisch Ladetisch und/oder Zuförderer hinsichtlich ihres Befestigungspunktes mit angehoben bzw. abgesenkt.

Dadurch ist es möglich, beim Einstellen des Gepäckförderers sowohl das hintere Ende des Hauptförderers auf die gewünschte Zwischenhöhe als auch das vordere Ende des Hauptförderers auf die Höhe der Ladeluke des Flugzeuges einzustellen und je nach Anwendung auch in die Ladeluke des Flugzeuges hinein zu verfahren. Sobald dies geschehen ist, wird lediglich noch die Höhe des hinteren Endes des Zuförderers verstellt und dadurch die Neigung des Zuförderers und ggf. des sich mitneigenden Zwischentisches, nicht jedoch die Höhe des hinteren Endes des Hauptförderers, selbst wenn sich dadurch für Hauptförderer und Zuförderer nicht die gleiche Neigung ergeben sollte.

Dies ist notwendig, da jede Verstellung des Hauptförderers in der Höhenlage am hinteren Ende aufgrund der Kinematik der Abstützung des Hauptförderers auch das vordere Ende des Hauptförderers geringfügig mit verlagert und deshalb dort Berührungen oder gar Beschädigungen am Flugzeug in der Umgebung der Ladeluke erfolgen könnten, was unbedingt zu vermeiden ist.

Wenn der Zuförderer um eine aufrecht stehende Achse verschwenkbar ist, kann der Zuförderer durch einfaches Verschwenken vom hinteren Ende des Hauptförderers aus in unterschiedliche Richtungen abragen, und damit z. B. beim Entladen sein Gepäck nacheinander in unterschiedliche Gepäckwägen ablegen.

Wenn diese aufrecht stehende Achse dabei durch den Zwischentisch hindurch verläuft, vollzieht das vordere Ende des Zuförderers eine Schwenkbewegung um einen Mittelpunkt im Zwischentisch herum.

Das vordere Ende des Zwischentisches besitzt vorzugsweise eine gerade Kante und eine Breite mindestens entsprechend der Breite des Hauptförderers, und schließt sich unmittelbar ans hintere Ende des Hauptförderers an, insbesondere auf der gleichen Höhe wie das hintere Ende des Hauptförderers. Ebenso befindet sich das vordere Ende des Zuförderers vorzugsweise auf Höhe der Hinterkante des Zwischentisches, insbesondere des Zwischentisches.

Bei entsprechender konvex bogenförmiger, insbesondere halbkreisförmiger, Gestaltung der Hinterkante des Zwischentisches kann dieser unabhängig von seiner Winkelstellung immer dicht an dem nicht mitschwenkenden Zwischentisch anschließen.

Die andere Lösung besteht darin, dass der Zwischentisch und der Zuförderer gemeinsam um eine vertikale Achse verschwenkt werden.

Diese vertikale Achse verläuft wiederum vorzugsweise durch den Zwischentisch hindurch oder an dessen vorderen Ende. In diesem Fall ist die Hinterkante des Zwischentisches gerade ausgebildet und besitzt eine Breite mindestens entsprechend der Breite des vorderen Endes des Zuförderers, an den sie unmittelbar anschließt.

Dafür ist bei dieser Lösung die Vorderkante des Zwischentisches in der Aufsicht betrachtet konvex ballig geformt und um einen Übergang zu der geraden Hinterkante des Hauptförderers zu schaffen, schließt sich an diesen ein Deckblech an, welches eine analog der Vorderkante des Zwischentisches geformte konkave Aussparung aufweist und die Vorderkante des Zwischentisches geringfügig überlappt.

Wenn zusätzlich das im Zwischentisch vorhandene Gleitelement und/oder Förderelement, beispielsweise die Förderrollen, um eine aufrecht stehende Achse schwenkbar ist, kann damit die Weitergaberichtung eines auf dem Zwischentisch durchlaufenden Gepäckstückes verändert werden:

Beispielsweise - falls die Richtung des Zuförderers in der Aufsicht betrachtet nicht mit der Richtung des Hauptförderers übereinstimmt - wird die Richtung des Zwischentisches wie etwa der Transportrollen im Zwischentisch auf einem Winkel eingestellt, der eine Mittelung zwischen der Winkelstellung des Hauptförderers und des Zuförderers darstellt, und zwar vorzugsweise automatisch.

Falls mehrere Zuförderer oder auch nur mehrere Abwurfrichtungen vom Zwischentisch aus bei ein und derselben Ladung an Gepäckstücken vorgesehen ist, kann bei jedem einzelnen Gepäckstück, sobald es sich auf dem Zwischentisch befindet, das Förderelement des Zwischentisches in eine andere Abwurfrichtung eingestellt werden und danach erst das Förderelement im Zwischentisch in Gang gesetzt werden oder das Gepäckstück manuell vom Zwischentisch geschoben werden, wodurch die einzelnen Gepäckstücke selektiv jeweils in die gewünschte Richtung abgeworfen werden. Das hintere Ende des Zuförderers ist gegenüber dem hinteren Ende des Hauptförderers oder dem Zwischentisch in der Höhe einstellbar.

Hauptförderer und ebenso der Zusatzförderer können aus einer Vielzahl hintereinander angeordneter Förderrollen bestehen, sind vorzugsweise jedoch als Förderbänder ausgebildet.

Das Förderelement im Zwischentisch dagegen besteht vorzugsweise aus einer oder mehreren angetriebenen Förderrollen, die aus der Ebene des Zwischentisches nach oben vorstehen. Solche Förderrollen können insbesondere in einem drehbaren Mittelteil des Zwischentisches gut untergebracht werden.

Der Zuförderer sollte um eine aufrecht stehende Achse herum einen Schwenkbereich von mindestens 45°, besser 90° oder gar 150° besitzen, um insbesondere halbkreisförmig alle Abwurfrichtungen abdecken zu können, ohne den Hauptförderer und damit den Gepäckförderer insgesamt rangieren zu müssen.

Wenn unterschiedliche Abwurfrichtungen mit ein und derselben Gepäckcharge realisiert werden sollen oder umgekehrt ein Beladen des Flugzeuges aus mehreren Gepäckwägen gleichzeitig durchgeführt werden soll, sind mehrere zum unteren Ende des Hauptförderers, also zum Zwischentisch hin, führende Zuförderer notwendig, auf die gleichzeitig abwechselnd von mehreren Bedienern Gepäckstücke aufgelegt bzw. abgelegt werden können. Diese mehreren Zuförderer sind dann vorzugsweise um die gleiche aufrecht stehende Achse verschwenkbar oder nur einer ist verschwenkbar und alle weiteren sind an einer fixen Drehlage befestigt.

Um die Länge des Gepäckförderers während des Verfahrens des Gepäckförderers möglichst gering zu halten, werden der Zuförderer oder die mehreren Zuförderer, insbesondere einschließlich des Zwischentisches, in eine vertikale Fahrstellung hochgeklappt.

Das Förderelement im Zwischentisch kann auch mit dem Verschwenken des Zuförderers automatisch mitgedreht werden, entweder im gleichen Maß, also mit dem gleichen Schwenkwinkel, oder in einem relativ dazu verringerten Maße, z. B. um den halben Winkel, so dass der Zwischentisch immer automatisch die hinsichtlich der Winkelstellung angesprochene Mittelstellung zwischen Hauptzuförderer und Zuförderer einnimmt.

Das Förderelement im Zwischentisch muss dabei nicht permanent angetrieben sein, sondern kann selektiv abhängig von einer Steuerung, beispielsweise nur bei Auflegen eines Gepäckstückes, angetrieben werden. Die Steuerung kann auch von weiteren Parametern beeinflusst werden, beispielsweise vom Gewicht oder den Abmessungen des Gepäckstückes, oder auch von einer Kennzeichnung, z. B. einem automatisch erkannten Zielort, der auf dem Gepäckstück angegeben ist.

Zu diesem Zweck ist es auch vorteilhaft, wenn im Zwischentisch und/oder im Zuförderer eine automatische Waage und/oder eine Zähleinrichtung für die darüber laufenden Gepäckstücke angeordnet ist, die mit einer entsprechenden Steuerung verbunden ist, welche dann diese Daten mit den vom z. B. Flughafen vorgegebenen Soll-Daten hinsichtlich Anzahl der Gepäckstücke und deren Einzelgewichten und/oder des Gesamtgewichtes vergleicht. Dadurch kann festgestellt werden, ob gegenüber den am Schalter eingecheckten Gepäckstücken eine größere oder kleinere Gepäckmenge an Bord genommen wurde. Dadurch können unter Umständen vergessene Gepäckstücke festgestellt werden oder andererseits auch zusätzlich ohne Einchecken auf anderen Wegen an Bord geschmuggelte Gepäckstücke festgestellt werden.

Beim Vorhandensein von mehreren Zuförderern können ein oder auch mehrere der Zuförderer in einer festen Winkelstellung - in der Aufsicht betrachtet - zum Hauptförderer angeordnet sein, während nur die restlichen Zuförderer verschwenkbar um eine aufrecht stehende Achse sind.

Der Zwischentisch wird in der Regel eine ebene, z. B. horizontale Oberfläche aufweisen, vor allem wenn darin Förderelemente wie etwa angetriebene Förderrollen angeordnet sind.

Zumindest an seinen Hinterkanten kann der Zwischentisch jedoch eine zunehmend nach unten geneigte Oberfläche aufweisen, und insbesondere kann der Zwischentisch eine vom vorderen Ende aus in alle Richtungen abfallende Oberflächen aufweisen, was vor allem dann empfehlenswert ist, wenn sich kein Förderelement in der Oberfläche des Zwischentisches befindet. Dann ist die Länge des Zwischentisches ohnehin so kurz wie möglich zu halten.

Um das Weiterleiten von Gepäckstücken über den Zwischentisch hinweg in die gewünschte Richtung des Zuförderers sicherzustellen, können seitlich neben dem Zwischentisch Leitflächen aufragen, deren hintere Enden insbesondere mit dem Verschwenken des Zuförderers mitschwenken.

Der Hauptförderer des Gepäckförderers ist dabei übereinstimmend mit der Längsrichtung des Chassis angeordnet, und am vorderen Ende des Hauptförderers kann zusätzlich eine Hauptförderer-Verlängerung angeordnet sein, die insbesondere in Längsrichtung ausfahrbar und auch seitlich verschwenkbar ist.

Somit ergibt sich ein Verfahren zur Einstellung des Gepäckförderers, bei der vor Beginn des Ladevorganges lediglich das hintere Ende des Hauptförderers grob und das vordere Ende des Hauptförderers genau auf die gewünschte Arbeitshöhe eingestellt werden müssen, während das hintere Ende des Zuförderers und damit dessen Neigung, ggf. einschließlich eines vorhandenen Zwischentisches, vom Bediener auch während des Ladevorganges auf eine solche Höhe eingestellt, wie es z. B. das momentane Niveau der Beladung im Gepäckwagen erfordert. Zusätzlich wird der Zuförderer auch um die aufrecht stehende Achse so verschwenkt, dass er genau in Richtung des momentan bedienten Bereiches im Gepäckwagen gerichtet ist.

### c) Ausführungsbeispiele

Ausführungsformen gemäß der Erfindung sind im Folgenden beispielhaft näher beschrieben. Es zeigen:
- Fig. 1:: den fahrbaren Gepäckförderer in Perspektive,
- Fig. 2:: den Gepäckförderer der Fig. 1 in der Seitenansicht, und
- Fig. 3:: den Gepäckförderer der Fig. 1 in der Aufsicht.

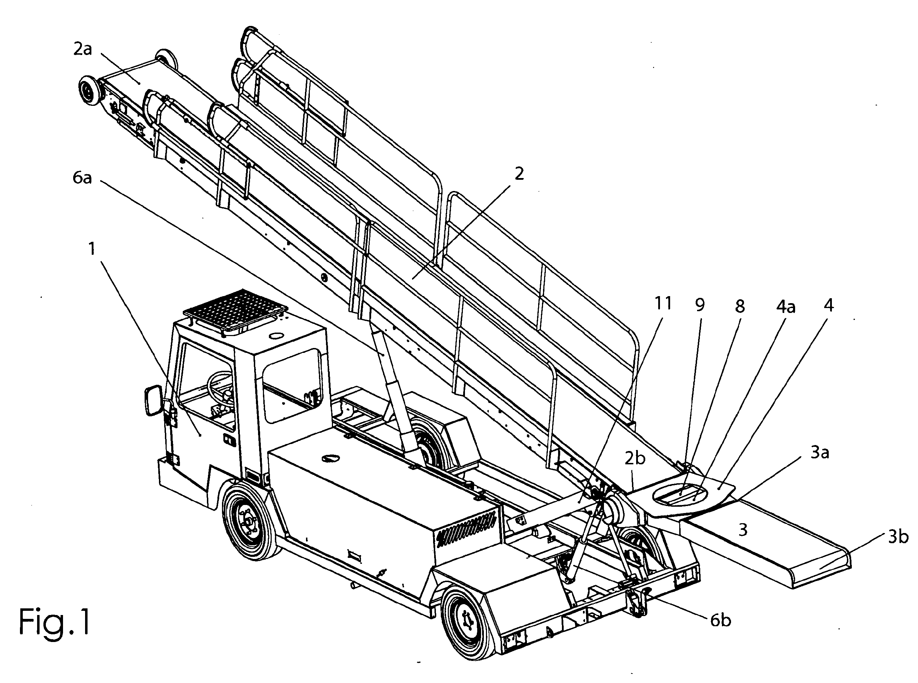

Wie am besten die Fig. 1 zeigt, erstreckt sich der Hauptförderer 2 in Form eines Förderbandes mit entsprechender Tragkonstruktion in Längsrichtung 10 entlang eines selbstfahrenden Chassis 1 eines Lastkraftwagens und verläuft dabei entlang der rechten Hälfte des Chassis, während sich auf der linken Seite vorne das Fahrerhaus und dahinter alle benötigten Betriebsaggregate wie Hydraulik und Elektrik sowie Pneumatik und auch der Antriebsmotor für das Chassis befinden.

In Fig. 1 ist der Hauptförderer 2 von hinten nach vorne schräg nach oben ansteigend in einer Betriebsstellung dargestellt, wobei der mittlere sowie hintere Bereich des Hauptförderers durch jeweils einen Hydraulikzylinder 6a,b separat anhebbar sind. Insbesondere kann die Hydrauliksteuerung veranlassen, dass beim Ausfahren des vorderen Hydraulikzylinders automatisch auch - jedoch im verringerten Maß - der hintere Hydraulikzylinder 6b mit ausgefahren wird. um fixe Drehpunkte sicherzustellen, ist in der Nähe des hinteren Endes des Hauptförderers 2 zusätzlich eine Stütze 11 mit fixer Länge mit ihren beiden Enden schwenkbar und schräg nach hinten oben ansteigend einerseits an der Unterseite des Hauptförderers und andererseits auf der Oberseite des Chassis schwenkbar befestigt.

In der Transportstellung ist der Hauptförderer durch Einziehen der Hydraulikzylinder 6a,b abgesenkt auf Höhe des Chassis und verläuft horizontal.

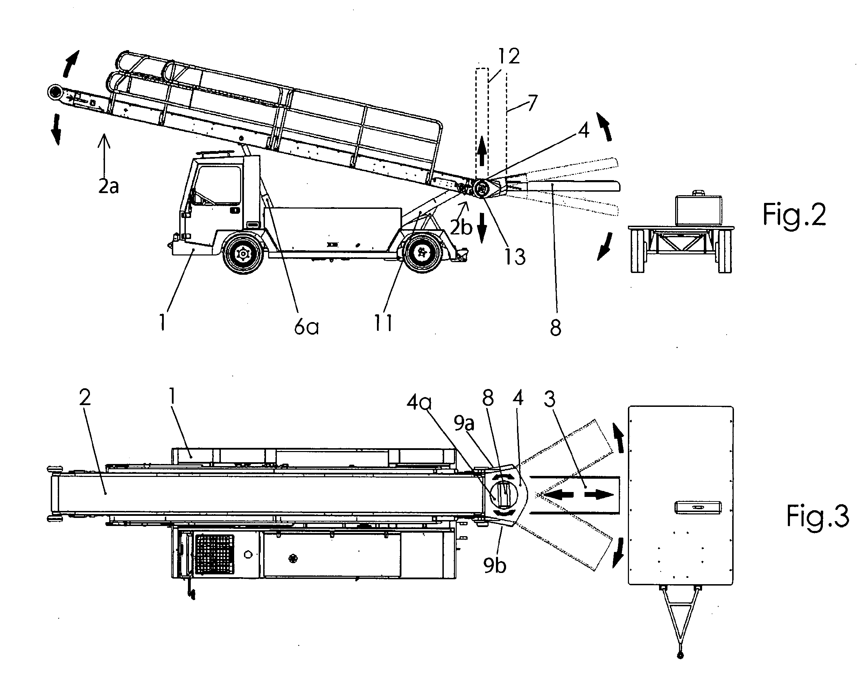

Im Mittelpunkt der Erfindung stehen jedoch die am hinteren Ende des Hauptförderers 2 angeordneten Elemente, deren Funktion am besten anhand der Figuren 2 und 3 ersichtlich ist:

Beim z. B. Beladen eines Flugzeuges ragt das vordere Ende 2a des Hauptförderers 2 in der Betriebsstellung an oder in die Ladeluke des Flugzeuges, während das zu verladende Gepäck auf Gepäckwägen gemäß Fig. 2 und 3 herangefahren und manuell von dort auf den Gepäckförderer gelegt werden muss.

Um diese manuelle Tätigkeit so weit als möglich zu erleichtern und zu beschleunigen, ist am hinteren Ende 2b des Hauptförderers ein Zwischentisch 4 in einer etwa horizontalen Lage, an dessen Hinterkante sich wiederum ein Zuförderer 3 wieder in Form eines Förderbandes anschließt. Beide gemeinsam können um eine horizontale Schwenkachse 13, die quer zur Förderrichtung des Hauptförderers 2 durch das vordere Ende des Zwischentisches 4 verläuft, verschwenkt werden, wodurch die Höhe des hinteren Endes 3b des Zuförderers 3 verändert wird. Dadurch kann diese Höhe angepasst werden an die momentane Ladehöhe im Gepäckwagen, die nicht immer auf dem Niveau des Gepäckwagens liegt, sondern bei hoch aufgetürmten Gepäckstücken auch in 2 m Höhe liegen kann.

Unabhängig von der Höhenverstellung kann der Zuförderer 3 verschwenkt werden um eine aufrecht stehende Achse 7, die sich im Bereich des Zwischentisches 4 befindet. Dadurch ragt der Zuförderer 3 mit seinem hinteren Ende in unterschiedliche radiale Richtungen, wodurch unterschiedliche Bereiche des quer hinter dem Zuförderer abgestellten Gepäckwagens be- und entladen werden können.

Eine nur geringe Fuge zwischen Zuförderer 3 und Zwischentisch ist sichergestellt, indem die Hinterkante des Zwischentisches 4 in der Aufsicht betrachtet konvex bogenförmig gekrümmt ist. Zusätzlich ist im Zwischentisch ein Förderelement 4a mit einer in der Aufsicht runden Kontur eingelassen und drehbar gegenüber dem Zwischentisch um eine aufrecht stehende Achse, insbesondere automatisch drehbar oder auch von Hand drehbar. In dem Förderelement sind über dessen Oberfläche geringfügig vorstehende z. B. Förderrollen 8 eingelassen, die die darauf gelangten Gepäckstücke in der eingestellten Förderrichtung weitertransportieren, die beim Beladen des Flugzeuges von hinten nach vorne und beim Entladen die umgekehrte Richtung ist.

Wird vom Bediener manuell die in der Aufsicht betrachtete Abstrebrichtung des Zuförderers verstellt, so verstellt sich das Drehkreisscheibenförmige Förderelement 4a um die Hälfte des Verstellwinkels des Zuförderers automatisch mit, so dass die Förderrolle oder Förderrollen 8 in dem Zwischentisch 4 automatisch immer den halben Auslenkungswinkel des Zuförderers gegenüber der Längsrichtung 10 aufweisen und damit die Weiterleitung der Gepäckstücke vom Zuförderer 3 an den Hauptförderer 2 und umgekehrt bei jeder Winkelstellung des Zuförderers sicherstellen.

Fig. 1 zeigt ferner, dass für den Transport des Gepäckförderers selbst an eine andere Arbeitsstelle zur Verkürzung der Gesamtlänge Zwischentisch 4 und Zuförderer 3 in eine annähernd aufrechte Transportstellung hochgeklappt werden können.

### BEZUGSZEICHENLISTE

- 1: Chassis
- 2: Hauptförderer
- 2a: vorderes Ende
- 2b: hinteres Ende
- 3: Zuförderer
- 3a: vorderes Ende
- 3b: hinteres Ende
- 4: Zwischentisch
- 5:
- 6a,b: Hydraulikzylinder
- 7: aufrechte Achse
- 8: Förderrolle
- 9: Leitfläche
- 10: Längsrichtung
- 11: Stütze
- 12: Fahrstellung
- 13: horizontale Schwenkachse

## Patentansprüche

1. Gepäckförderer, insbesondere fahrbarer Vorfeld-Gepäckförderer mit
- einem Hauptförderer (2), dessen vorderes Ende (2a) anhebbar ist bis auf Höhe der Ladeluke des zu beladenden Flugzeuges, und der mittels beweglicher Abstützelemente auf einem Chassis (1) montiert ist,
- wenigstens einem Zuförderer (3), dessen vorderes Ende (3a) dem hinteren Ende (2b) des Hauptförderers (2) benachbart ist, wobei das hintere Ende (3b) des Zuförderers (3) höhenverstellbar ist,
- einem Zwischentisch (4) zwischen dem Hauptförderer (2) und dem Zuförderer (3),
**dadurch gekennzeichnet, dass**
- der Zwischentisch (4) höhenverstellbar ist und
- das vordere Ende (3a) des Zuförderers (3) höhenverstellbar ist.

2. Gepäckförderer nach Anspruch 1,
**dadurch gekennzeichnet, dass**
das vordere Ende (3a) des Zuförderers (3) zusammen mit dem hinteren Ende (2b) des Hauptförderers (2) und/oder dem Zwischentisch (4)automatisch höhenverstellbar ist.

3. Gepäckförderer nach **einem der vorhergehenden Ansprüche,**
**dadurch gekennzeichnet, dass**
- der Zwischentisch (4) und/oder der Zuförderer (3) am hinteren Ende (2b) des Hauptförderers (2) befestigt sind, und/oder
- der Zuförderer (3) um eine aufrecht stehende Achse, die insbesondere durch den Zwischentisch (4) hindurch verläuft, verschwenkbar ist.

4. Gepäckförderer nach einem der vorhergehenden Ansprüche,
**dadurch gekennzeichnet, dass**
- das hintere Ende des Zwischentisches (4) in der Aufsicht betrachtet konvex gekrümmt, insbesondere halbkreisförmig ausgebildet ist und der Zuförderer (3) um den Zwischentisch (4) herum verschwenkbar ist, und/oder
- das vordere Ende des Zwischentisches (4) eine gerade Kante besitzt und sich insbesondere auf Höhe des hinteren Endes (2b) des Hauptförderers (2) befindet.

5. Gepäckförderer nach einem der vorhergehenden Ansprüche,
**dadurch gekennzeichnet, dass**
- das vordere Ende (3a) des Zuförderers (3) sich auf Höhe des Zwischentisches (4) befindet, und/oder
- das vordere Ende des Zwischentisches (4) in der Aufsicht betrachtet konvex gekrümmt ist und insbesondere von einem analog konkav ausgesparten Deckblech am vorderen Rand geringfügig überlappt wird.

6. Gepäckförderer nach einem der vorhergehenden Ansprüche,
**dadurch gekennzeichnet, dass**
- das vordere Ende (3a) des Zuförderers (3) am hinteren Ende des Zwischentisches (4), befestigt ist und insbesondere beide gemeinsam um eine horizontale Schwenkachse (13), insbesondere am vorderen Ende des Zwischentisches (4), verschwenkbar sind, und/oder
- der Zwischentisch (4) ein Gleitelement, insbesondere ein Förderelement, (4a) enthält, welches insbesondere um eine aufrecht stehende Achse schwenkbar ist.

7. Gepäckförderer nach einem der vorhergehenden Ansprüche,
**dadurch gekennzeichnet, dass**
- Hauptförderer (2) und/oder Zuförderer (3) als Förderbänder ausgebildet sind, und/oder
- der Zwischentisch (4) ein oder mehrere, insbesondere angetriebene, Förderrollen (8) als Förderelement aufweist, die aus der Ebene des Zwischentisches (4) nach oben etwas vorstehen.

8. Gepäckförderer nach einem der vorhergehenden Ansprüche 4 bis 7 in Kombination mit Anspruch 3,
**dadurch gekennzeichnet, dass**
- der Zuförderer (3) einen Schwenkbereich um die aufrecht stehende Achse (7) von mindestens 45 Grad, besser mindestens 90 Grad, besser mindestens 150 Grad besitzt, und/oder
- alle vorhandenen Zuförderer (3a, b...) verschwenkbar um eine, insbesondere die gleiche, aufrecht stehende Achse (7), sind.

9. Gepäckförderer nach einem der vorhergehenden Ansprüche,
**dadurch gekennzeichnet, dass**
- der Gepäckförderer mehr als einen Zuförderer (3a, b...) aufweist, und/oder
- das hintere Ende (3b) des Zuförderers (3), insbesondere zusammen mit dem Zwischenelement, insbesondere Zwischentisch (4), in eine vertikale Fahrstellung des Zuförderers (3) hochstellbar ist.

10. Gepäckförderer nach einem der vorhergehenden Ansprüche 3 bis 6, 8 oder 9, in Kombination mit Anspruch 7,
**dadurch gekennzeichnet, dass**
- das Förderelement (4a) im Zwischentisch (4) automatisch in Abhängigkeit vom Schwenkwinkel des Zuförderers (3) mitgedreht, insbesondere relativ dazu im verringerten, insbesondere halben Maße, mitgedreht wird, und/oder
- das Förderelement (4a) im Zwischentisch (4) hinsichtlich Antrieb des Förderelementes und Drehung des Förderelementes (4) in Abhängigkeit vom Aufliegen eines Gepäckstückes auf dem Förderelement und gegebenenfalls weiteren Parametern selektiv von einer Steuerung angesteuert wird.

11. Gepäckförderer nach einem der vorhergehenden Ansprüche,
**dadurch gekennzeichnet, dass**
- im Zwischentisch (4) und/oder im Zuförderer (3) eine Waage angeordnet ist und im Zwischentisch, insbesondere dessen Förderelement (4a), eine Zählvorrichtung angeordnet ist, die beide mit einer Steuerung verbunden sind, die **dadurch** Anzahl und Gewicht der Gepäckstücke ermittelt und insbesondere mit vom Flughafen übergebenen Soll-Daten vergleicht, und/oder
- die weiteren Parameter eine Kennzeichnung, insbesondere ein Barcode, das Gewicht und/oder die Abmessungen des Gepäckstückes sind.

12. Gepäckförderer nach einem der vorhergehenden Ansprüche,
**dadurch gekennzeichnet, dass**
- der Hauptförderer (2) und/oder der Zuförderer (3) Neigungssensoren aufweisen, und/oder
- der wenigstens eine Zuförderer (3b...) in einer bestimmten Winkellage zum Hauptförderer (2) und Zwischentisch (4) fest angeordnet ist, insbesondere rechtwinklig zum Hauptförderer (2).

13. Gepäckförderer nach einem der vorhergehenden Ansprüche,
**dadurch gekennzeichnet, dass**
- der Zwischentisch (4) eine horizontale Oberfläche aufweist, und/oder
- der Zwischentisch (4) eine vom vorderen Ende aus in alle Richtungen abfallende Oberfläche aufweist und insbesondere in seiner Oberfläche kein Förderelement (4a) angeordnet ist.

14. Gepäckförderer nach einem der vorhergehenden Ansprüche,
**dadurch gekennzeichnet, dass**
- seitlich des Zwischentisches aufragende Leitflächen (9A, B) angeordnet sind, deren hintere Enden insbesondere mit dem Verschwenken des Zuförderers (3) mitschwenken, und/oder
- der Hauptförderer (2) in Längsrichtung (10) des Chassis (1) angeordnet ist.

15. Gepäckförderer nach einem der vorhergehenden Ansprüche,
**dadurch gekennzeichnet, dass**
am vorderen Ende (2a) des Hauptförderers (2) eine Hauptförderer-Verlängerung, insbesondere eine ausfahrbare und seitlich ausschwenkbare Verlängerung, angeordnet ist.

16. Verfahren zum Betrieb, insbesondere der Einstellung, eines Gepäckförderers mit
- einem Hauptförderer (2), dessen vorderes Ende (2a) anhebbar ist bis auf Höhe der Ladeluke des zu beladenden Flugzeuges,
- wenigstens einem Zuförderer (3), dessen vorderes Ende (3a) dem hinteren Ende (2b) des Hauptförderers (2) benachbart ist, wobei das hintere Ende (3b) des Zuförderers (3) höhenverstellbar ist,
- einem Zwischentisch (4), zwischen dem Hauptförderer (2) und dem Zuförderer (3),
- einem Chassis (1), an dem alle Elemente des Gepäckförderers montiert sind,
**dadurch gekennzeichnet, dass**
- das vordere Ende (2a) und das hintere Ende (2b) des Hauptförderers (2) manuell auf die gewünschte Höhe eingestellt werden,
- der Zwischentisch (4), automatisch mit der Höhe des hinteren Endes (2b) des Hauptförderers (2) mitbewegt wird und ebenso das vordere Ende des Zuförderers (3),
- während des Betriebes des Gepäckförderers lediglich die Höhe des hinteren Endes des Zuförderers (3b) verstellt wird, die Stellung des Hauptförderers (2) jedoch vorzugsweise unverändert bleibt bis zum Beenden des Be- oder Entladens des Flugzeuges.

17. Verfahren nach Anspruch 16,
**dadurch gekennzeichnet, dass**
sich die Neigung des Zwischen elementes, insbesondere des Zwischentisches (4), zusammen mit der Neigung des Zuförderers (3) automatisch ändert mit der Höhenverstellung des hinteren Endes (3b) des Zuförderers (3).

## Claims

1. A luggage conveyor, in particular a moveable ramp luggage conveyor, comprising:
- a main conveyor (2), whose front end (2a) is configured to be raised to an elevation of a loading hatch of an aircraft to be loaded and which is mounted on a chassis (1) through moveable support elements;
- at least one feed conveyor (3), whose front end (3a) is adjacent to a rear end (2b) of the main conveyor (2), wherein the rear end (3b) of the feed conveyor (3) is adjustable in elevation;
- an intermediary table 4 between the main conveyor (2) and the feed conveyor (3), wherein
- the intermediary table (4) is adjustable in elevation,
- the front end (3a) of the feed conveyor (3) is adjustable in elevation.

2. The luggage conveyor according to claim 1, wherein the front end (3a) of the feed conveyor (3) is automatically elevation adjustable together with the rear end (2b) of the main conveyor (2) and/or the intermediary table (4).

3. The luggage conveyor according to one of the preceding claims, wherein
- the intermediary table (4) and/or the feed conveyor (3) are attached to the rear end (2b) of the main conveyor (2), and/or
- the feed conveyor (3) is pivotable about a vertical axis, which extends in particular through the intermediary table (4).

4. The luggage conveyor according to one of the preceding claims, wherein
- the rear end of the intermediary table (4) is configured in a convex curved shape in top view, in particular configured semicircular and the feed conveyor (3) is pivotable about the intermediary table (4), and/or
- the front end of the intermediary table (4) comprises a straight edge and is disposed in particular at the elevation of the rear end (2b) of the main conveyor (2).

5. The luggage conveyor according to one of the preceding claims, wherein
- the front end (3a) of the feed conveyor (3) is disposed at the elevation of the intermediary table (4) and/or
- the front end of the intermediary table (4) is configured in a convex curved shape in top view and in particular is slightly overlapped at the front edge by a cover plate which is analogously recessed in a concave manner.

6. The luggage conveyor according to one of the preceding claims, wherein
- the front end (3a) of the feed conveyor (3) is disposed at the rear end of the intermediary table (4) and both are pivotable together about a horizontal pivot axis (13), in particular at the front end of the intermediary table (4) and/or
- the intermediary table (4) comprises a slide element, in particular a conveying element (4a), which is pivotable in particular about a vertical axis.

7. The luggage conveyor according to one of the preceding claims, wherein
- the main conveyor (2) and/or the feed conveyor (3) are configured as conveyor belts, and/or
- the intermediary table (4) is configured of one or several, in particular powered, conveyor rollers (8) as conveying elements, which protrude slightly upward from the level of the intermediary table (4).

8. The luggage conveyor according to one of the preceding claims 4 through 7 in combination with claim 3, wherein
- the feed conveyor (3) comprises a pivot range around the vertical axis (7) of at least 45 degrees, preferably at least 90 degrees, particularly preferably at least 150 degrees, and/or
- all provided feed conveyors (3a, b) are pivotable about a vertical axis (7), in particular the same vertical axis.

9. The luggage conveyor according to one of the preceding claims, wherein
- the luggage conveyor comprises more than one feed conveyor (3a, b...) and/or
- the rear end (3b) of the feed conveyor (3) is adjustable upward into a vertical driving position of the feed conveyor (3), in particular adjustable together with the intermediary element, in particular the intermediary table (4).

10. The luggage conveyor according to one of the preceding claims 3 through 6, 8 or 9, in combination with claim 7, wherein
- the conveying element (4a) in the intermediary table (4) is automatically co-rotated as a function of the pivoting angle of the feed conveyor (3), in particular co-rotated relative the pivoting angle of the feed conveyor by a reduced amount, in particular by half the amount and/or
- the conveying element (4a) in the intermediary table (4) is selectively controlled by a control with respect to driving and rotating the conveying element (4a) as a function of a piece of luggage lying on the conveying element and possibly as a function of other parameters.

11. The luggage conveyor according to one of the preceding claims, wherein
- a scale is disposed in the intermediary table (4) and/or in the feed conveyor (3) and a counting device is disposed in the intermediary table (4), in particular in its conveying element (4a), wherein both the scale and the counting device are connected to a control, which detects the quantity and the weight of the luggage pieces and in particular compares them to target values handed over by the airport, and/or
- additional parameters comprise identification, in particular a bar code, the weight and/or dimensions of the piece of luggage.

12. The luggage conveyor according to one of the preceding claims, wherein
- the main conveyor (2) and the feed conveyor (3) comprise inclination sensors, and/or
- the at least one feed conveyor (3b...) is fixated in a particular angular position relative to the main conveyor (2) and the intermediary table (4), in particular perpendicular to the main conveyor (2).

13. The luggage conveyor according to one of the preceding claims, wherein
- the intermediary table (4) comprises a horizontal surface, and/or
- the intermediary table (4) comprises a surface, which is inclined downward from the front end in all directions, and in particular no conveying element (4a) is disposed in the surface of the intermediary table.

14. The luggage conveyor according to one of the preceding claims, wherein
- upward protruding guide plates (9A, B) are disposed at the sides of the intermediary table, wherein the rear ends of the guide plates pivot in particular with the pivoting of the feed conveyor (3), and/or
- the main conveyor (2) is disposed in longitudinal direction (10) of the chassis (1).

15. The luggage conveyor according to one of the preceding claims, wherein
- an extension of the main conveyor, which is in particular deployable and pivotable laterally, is disposed at the front end (2a) of the main conveyor (2).

16. A method for operating, in particular adjusting a luggage conveyor, comprising:
- a main conveyor (2), whose front end (2a) is configured to be raised to an elevation of a loading hatch of an aircraft to be loaded;
- at least one feed conveyor (3), whose front end (3a) is adjacent to a rear end (2b) of the main conveyor (2), wherein the rear end (3b) of the feed conveyor (3) is adjustable in elevation;
- an intermediary table 4 between the main conveyor (2) and the feed conveyor (3);
- a chassis (1), at which all elements of the luggage conveyor are mounted, wherein
- the front end (2a) and the rear end (2b) of the main conveyor (2) are manually adjusted to the desired elevation;
- the intermediary table (4) and the front end of the feed conveyor (3) are automatically moved with the elevation of the rear end (2b) of the main conveyor (2);
- only the elevation of the rear end of the feed conveyor (3b) is adjusted during the operation of the luggage conveyor, however the position of the main conveyor (2) preferably remains unchanged until the loading or unloading of the aircraft is completed.

17. The method according to claim 16 wherein
the inclination of the intermediary element, in particular of the intermediary table (4), together with the inclination of the feed conveyor (3), change automatically with an elevation adjustment of the rear end (3b) of the feed conveyor (3).

## Revendications

1. Convoyeur à bagages, en particulier convoyeur à bagages mobile avec un convoyeur principal (2) dont l'extrémité avant (2a) peut être soulevée jusqu'à hauteur de la trappe de chargement de l'avion à charger et qui est monté sur un châssis (1) au moyen d'éléments de support,
- au moins un convoyeur d'amenée (3) dont l'extrémité avant (3a) est voisine de l'extrémité arrière (2b) du convoyeur principal (2), l'extrémité arrière (3b) du convoyeur d'amenée (3) étant réglable en hauteur
- avec un plateau intermédiaire (4) entre le convoyeur principal (2) et le convoyeur d'amenée (3),
**caractérisé en ce que**
- le plateau intermédiaire (4) est réglable en hauteur et
- l'extrémité avant (3a) du convoyeur d'amenée (3) est réglable en hauteur.

2. Convoyeur à bagages selon la revendication 1, **caractérisé en ce que** l'extrémité avant (3a) du convoyeur d'amenée (3) est réglable automatiquement en hauteur ensemble avec l'extrémité arrière (2b) du convoyeur principal (2) et/ou du plateau intermédiaire (4).

3. Convoyeur à bagages selon l'une des revendications précédentes, **caractérisé en ce que**
- le plateau intermédiaire (4) et/ou le convoyeur d'amenée (3) sont fixés sur l'extrémité arrière (2b) du convoyeur principal (2) et/ou
- le convoyeur d'amenée (3) est pivotant autour d'un axe perpendiculaire qui traverse en particulier le plateau intermédiaire (4).

4. Convoyeur à bagages selon l'une des revendications précédentes, **caractérisé en ce que**
- l'extrémité arrière du plateau intermédiaire (4) est courbée convexe observée en vue de dessus, en particulier est réalisée semi-circulaire et le convoyeur d'amenée (3) est pivotant autour du plateau intermédiaire (4) et/ou
- l'extrémité avant du plateau intermédiaire (4) possède un bord droit et se trouve en particulier à hauteur de l'extrémité arrière (2b) du convoyeur principal (2).

5. Convoyeur à bagages selon l'une des revendications précédentes, **caractérisé en ce que**
- l'extrémité avant (3a) du convoyeur d'amenée (3) se trouve à hauteur du plateau intermédiaire (4), et/ou
- l'extrémité avant du plateau intermédiaire (4) est courbée convexe observée en vue de dessus et en particulier est chevauchée légèrement sur le bord avant par une tôle de recouvrement évidée de manière analogue concave.

6. Convoyeur à bagages selon l'une des revendications précédentes, **caractérisé en ce que**
- l'extrémité avant (3a) du convoyeur d'amenée (3) est fixée sur l'extrémité arrière du plateau intermédiaire (4) et en particulier les deux sont pivotants en commun autour d'un axe de pivotement horizontal (13), en particulier à l'extrémité avant du plateau intermédiaire (4), et/ou
- le plateau intermédiaire (4) comporte un élément de glissement, en particulier un élément de convoyage (4a) qui est pivotant en particulier autour d'un axe vertical.

7. Convoyeur à bagages selon l'une des revendications précédentes, **caractérisé en ce que**
- le convoyeur principal (2) et/ou le convoyeur d'amenée (3) sont réalisés comme des tapis de convoyage et/ou
- le plateau intermédiaire (4) présente un ou plusieurs galets de convoyage (8) en particulier entraînés qui font un peu saillie vers le haut du plan du plateau intermédiaire (4).

8. Convoyeur à bagages selon l'une des revendications précédentes 4 à 7, en combinaison avec la revendication 3, **caractérisé en ce que**
- le convoyeur d'amenée (3) comporte une zone de pivotement autour de l'axe vertical (7) d'au moins 45 degrés, de préférence au moins 90 degrés, au mieux au moins de 150 degrés, et/ou
- tous les convoyeurs d'amenée existants (3a, b...) sont pivotants autour d'un, en particulier du même axe vertical (7).

9. Convoyeur à bagages selon l'une des revendications précédentes, **caractérisé en ce que**
- le convoyeur de bagages présente plus d'un convoyeur d'amenée (3a, b...) et/ou
- l'extrémité arrière (3b) du convoyeur d'amenée (3) est réglable en hauteur en particulier ensemble avec l'élément intermédiaire, en particulier le plateau intermédiaire (4) dans une position verticale de déplacement du convoyeur d'amenée (3).

10. Convoyeur à bagages selon l'une des revendications 3 à 6, 8, ou 9, en combinaison avec la revendication 7, **caractérisé en ce que**
- l'élément de convoyage (4a) est entraîné en rotation dans le panneau intermédiaire (4) automatiquement en fonction de l'angle de pivotement du convoyeur d'amenée (3), en particulier relativement dans une mesure réduite, en particulier dans une demi-mesure et/ou
- l'élément de convoyage (4a) est entraîné de manière sélective par une commande dans le plateau intermédiaire (4) en fonction de l'entraînement de l'élément de convoyage et de la rotation de l'élément de convoyage (4) en fonction de l'application d'un bagages sur l'élément de convoyage et éventuellement d'autres paramètres.

11. Convoyeur à bagages selon l'une des revendications précédentes, **caractérisé en ce que**
- dans le plateau intermédiaire (4) et/ou dans le convoyeur d'amenée (3), il est disposé une balance et dans le plateau intermédiaire, en particulier son élément de convoyage (4a), un dispositif de comptage, les deux étant reliés à une commande, qui détermine ainsi le nombre et le poids des bagages et en particulier compare les données de consigne transmises par l'aéroport et/ou
- les autres paramètres sont une caractéristique, en particulier un code barre, le poids et/ou les dimensions du bagage.

12. Convoyeur à bagages selon l'une des revendications précédentes, **caractérisé en ce que**
- le convoyeur principal (2) et/ou le convoyeur d'amenée (3) présentent des capteurs d'inclinaison et/ou
- au moins un convoyeur d'amenée (3b,...) est disposé fixement dans une position angulaire définie par rapport au convoyeur principal (2) et au plateau intermédiaire (4) en particulier en angle droit avec le convoyeur principal (2).

13. Convoyeur à bagages selon l'une des revendications précédentes, **caractérisé en ce que**
- le plateau intermédiaire (4) présente une surface horizontale et/ou,
- le plateau intermédiaire (4) présente une surface ascendante depuis l'extrémité avant dans toutes les directions et aucun élément de convoyage (4a) n'est disposé en particulier dans sa surface.

14. Convoyeur à bagages selon l'une des revendications précédentes, **caractérisé en ce que**
- sur le côté des surfaces de guidage (9A, B) dépassant du plateau intermédiaire, leurs extrémités arrière peuvent pivoter en particulier avec le pivotement du conducteur d'amenée (3), et/ou
- **en ce que** le convoyeur principal (2) est disposé dans le sens longitudinal (10) du châssis (1).

15. Convoyeur à bagages selon l'une des revendications précédentes, **caractérisé en ce que** sur l'extrémité avant (2a) du convoyeur principal (2), il est disposé un prolongement du convoyeur principal en particulier un prolongement extractible et latéralement pivotant.

16. Procédé pour le fonctionnement, en particulier le réglage d'un convoyeur à bagages avec
- un convoyeur principal (2) dont l'extrémité avant (2a) peut être soulevée jusqu'à hauteur de la trappe de chargement de l'avion à charger,
- au moins un convoyeur d'amenée (3) dont l'extrémité avant (3a) est voisine de l'extrémité arrière (2b) du convoyeur principal (2), l'extrémité arrière (3b) du convoyeur d'amenée (3) étant réglable en hauteur,
- avec un plateau intermédiaire (4) entre le convoyeur principal (2) et le convoyeur d'amenée (3),
- un châssis (1) sur lequel sont montés tous les éléments du convoyeur de bagages, **caractérisé en ce que**
- l'extrémité avant (2a) et l'extrémité arrière (2b) du convoyeur principal (2) sont réglées manuellement à la hauteur souhaitée,
- le plateau intermédiaire (4) est déplacé automatiquement avec la hauteur de l'extrémité arrière (2b) du convoyeur principal (2) et de même avec l'extrémité avant du convoyeur d'amenée (3),
- pendant le fonctionnement du convoyeur à bagages, il faut simplement régler la hauteur de l'extrémité arrière du conducteur d'amenée (3b), **en ce que** la position du convoyeur principal (2) reste de préférence inchangée jusqu'à la fin du chargement ou déchargement de l'avion.

17. Procédé selon la revendication 16, **caractérisé en ce que** l'inclinaison de l'élément intermédiaire, en particulier du plateau intermédiaire (4) se modifie ensemble avec l'inclinaison du convoyeur d'amenée (3) de manière automatique avec le réglage en hauteur de l'extrémité arrière (3b) du convoyeur d'amenée (3).
